# EUROPEAN PATENT SPECIFICATION

(11) **EP 1 185 363 B1**
(45) Date of publication and mention of the grant of the patent: **15.06.2005**
(21) Application number: 00917936.7
(22) Date of filing: 10.03.2000
(51) Int. Cl.: B01J 19/00, G01N 33/543, C12Q 1/68

(54) **SELF ASSEMBLING ARRAYS**
SICH SELBST ANORDNENDE MATRIX
RESEAUX AUTO-ASSEMBLES

(30) Priority: 11.03.1999 US 123894 P
(43) Date of publication of application: 13.03.2002
(73) Proprietor: Combimatrix Corporation, Snoqualmie, Washington 98065 (US)
(72) Inventor: MONTGOMERY, Donald, D., Millbrae, CA 94030 (US)
(74) Representative: Wittop Koning, Tom Hugo
(86) International application number: PCT/US2000/006675
(87) International publication number: WO 2000/053311

(56) References cited:
- EP-A- 0 846 776
- WO-A-90/15070
- WO-A-94/20521
- WO-A-97/12030
- WO-A-98/01221
- WO-A-99/35688
- US-A- 5 738 996

## Description

### FIELD OF THE INVENTION

The present invention is in the field of biological and chemical synthesis and processing. The present invention relates to methods for generating self-assembling mioroarrays.

The present application claims priority to U.S. Provisional Application Serial No. 60/123,894 filed March 11, 1999.

### BACKGROUND OF THE INVENTION

Advances are continually emerging in the field of biological and chemical processing and synthesis equipment. Many novel and improved arrays or "gene chips" are being developed providing rapid methods for synthesizing chemical and biological materials. Examples of such technologies include those described by Pirrung *et al*., U.S. Patent No. 5,143,854, those described by Southern in WO 93/22480, those described by Heller in WO 95/12808, those described in U.S. Patent No. 5,849,486, those described in U.S. Patent No. 5,632,957, those described in U.S. Patent No. 5,605,662 and those described by Montgomery in WO 98/01221. Methods for synthesizing chemical and biological materials may employ, for example, photolithographic techniques or electrochemical techniques.

Methods of preparing large numbers of different ligands have been painstakingly slow and prohibitively expensive when used at a scale sufficient to permit effective rational or random screening. For example, the method described by Merrifield et al. *J. Am. Chem. Soc*. 85:2149-2154 (1963) has been used to synthesize peptides on solid supports. In this method, an amino acid is bound covalently to a support made of an insoluble polymer. Another amino acid with an alpha protected group is reacted with the covalently bonded amino acid to form a dipeptide. After washing, the protective group is removed and a third amino acid with an alpha protective group is added to the dipeptide. This process is continued until a peptide of a desired length and sequence is obtained. Using the Merrifield method, synthesis of more than a handful of peptide sequences in a day is not technically feasible or economically practical.

To synthesize larger numbers of polymer sequences, it has been proposed to use a series of reaction vessels for polymer synthesis- For example, a tubular reactor system may be used to synthesize a linear polymer on a solid phase support by automated sequential addition of reagents. This method, however, also does not enable the synthesis of a sufficiently large number of polymer sequences for effective and economical screening.

Another method of preparing a plurality of polymer sequences uses a porous container enclosing a known quantity of reactive particles, larger in size than pores of the container. The particles in the containers may be selectively reacted with desired materials to synthesize desired sequences of product molecules. However, as with the other methods known in the art, this method is not practical for the synthesis of a sufficient variety of polypeptides for effective screening.

Other techniques have also been described and attempted. Several of these methods include synthesis of peptides on 96 plastic pins that fit the format of standard microtiter plates. Unfortunately, while these techniques have been somewhat useful, substantial problems remain. Methods using standard microtiter plates continue to be limited in the diversity of sequences that can be synthesized and screened. Although it is recognized that using microtiter plates produces essentially pure polymers because each polymer is synthesized in an isolated well of the microtiter plate, the number of polymers that can be produced in any given time is limited by the number of wells in a microtiter plate, *i*.*e*., 96. Moreover, the equipment needed for synthesis in the microtiter plates is large. Because of this limitation, use of microtiter plates requires a large amount of space to produce a relatively small number of peptides.

Electrochemical synthesis methods and porous arrays for performing the same are described in United States Patent Application Serial Nos. 09/003,075 and 09/214,348, and in international patent application numbers PCF/US97/11463 and PCT/US99/00599. Such microarrays and synthesis methods may be employed to synthesize arrays designed to detect molecules of interest in a biological sample. It is an object of the present invention to provide a method for producing arrays for such detection and to produce arrays designed to detect molecules of interest in a rapid and specific fashion.

### SUMMARY OF THE INVENTION

In a first aspect, the present invention features a method . for making a self-assembling array being formed on a porous membrane having a plurality of electrodes proximate the porous membrane, the method comprising the steps of:
(a) preparing one or more spatially multiplexed arrays of oligonucleotides,
(b) exposing the oligonucleotide array to a solution that contains at least one antibody molecule comprising an oligonucleotide moiety, capable of binding to an oligonucleotide of the array by hybridisation interaction, and
(c) washing off unbound antibody molecules comprising an oligonucleotide moiety to form the self assembled array.

In a second aspect, the present invention fcatures self assembling arrays prepared in accordance with the present invention. The product of the methods according to the present invention is an array of immobilized materials that are spatially multiplexed. Such an array may be used for screening materials for desirable properties in a high throughput manner. Such an array may also be used for detecting the presence of one or more molecules in a sample and therefore provide diagnostic evaluation.

Also, methods are disclosed for detecting a target molecule in a sample comprising the step of contacting a biological sample with an array comprising molecules displayed in a spatially multiplexed manner. The method features contacting a biological sample with an array. Preferably, the array comprises at least about 1000 coded affinity molecules. The method is preferably performed under conditions suitable to allow binding of target molecules to corresponding ligands or binding domains. Preferably, the detection is performed using fluorescently labeled tags that may be detected by such devices as epifluorescent microscopes and a CCD camera.

### BRIEF DESCRIPTION OF THE FIGURES

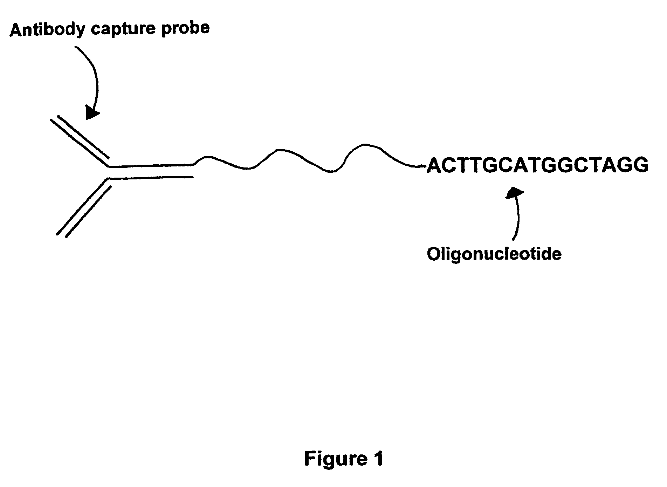

**Figure 1** depicts an exemplary moiety that may self assemble in a spatially multiplexed manner when exposed to a coded affinity array, the example being an antibody capture probe bound to an oligonucleotide.

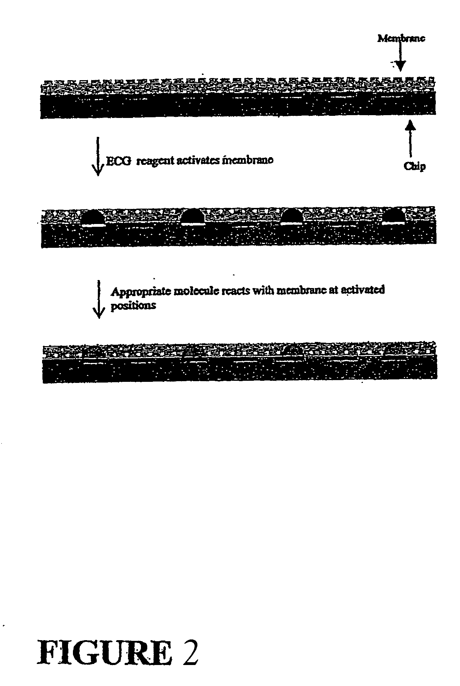

**Figure 2** describes how preferred arrays in accordance with the present invention may be used to synthesize a pattern of molecules. First, the array is coated with a biocompatible porous membrane that allows molecules to flow freely between a bulk solvent and an electrode. The array may then be immersed in a solution containing a precursor to an electrochemically-generated (ECG) reagent of interest. A computer may then interface with the array to turn on the desired electrode pattern, and the precursor may be electrochemically converted into an active species. The electrochemically-generated (ECG) reagent, in turn, reacts with molecules immobilized to the membrane overlying the electrode.

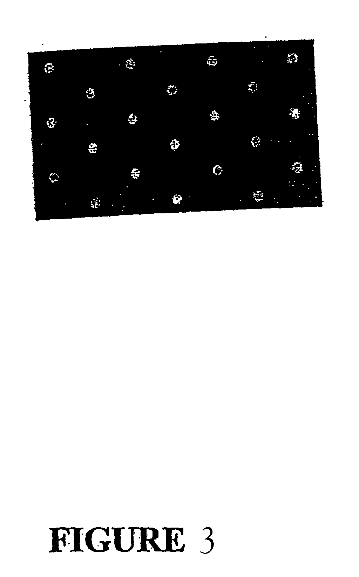

**Figure 3** illustrates a central feature of preferred arrays in accordance with the present invention having the ability to confine the ECG reagents to a region immediately adjacent to a selected microelectrode. Here, a fluorescein dye has been immobilized covalently at individually addressed microelectrode locations. The dye may be tightly confined to a checkerboard pattern and exhibits substantially no chemical crosstalk between active and inactive microelectrodes. This level of localization of ECG reagents may be achieved by exploiting the physical chemistry of the solution in which the microelectrode array is immersed. Such solutions usually contain buffers and scavengers that react with ECG reagents. However, the rate at which ECG reagents are produced can overwhelm the ability of the solution to react with them in the small local area immediately proximate to the microelectrode. As a result, chemistry that is mediated by ECG reagents occurs near selected microelectrodes, but there is no chemical crosstalk.

### DETAILED DESCRIPTION OF THE INVENTION

In a first aspect, the present invention features a method for making a self-assembling array being formed on a porous membrane having a plurality of electrodes proximate the porous membrane, the method comprising the steps of:
(a) preparing one or more spatially multiplexed arrays of oligonucleotides,
(b) exposing the oligonucleotide array to a solution that contains at least one antibody molecule comprising an oligonucleotide moiety, capable of binding to an oligonucleotide of the array by hybridisation interaction, and
(c) washing off unbound antibody molecules comprising an oligonucleotide moiety to form the self assembled array.

These arrays may be prepared by, for example, synthesizing the molecules *in situ* using a electrode array. Other methods for preparing spatially multiplexed arrays of coded molecules will be evident to one skilled in the art.

Various materials may be tagged chemically using various molecules having specific affinity for various spatial sites in the coded affinity array. The materials may be immobilized in a self-organizing manner onto various spatial locations based on the affinity of such chemical tags for the coded affinity molecule at any given spatial location. The molecules having coded affinity are oligonucleotides.

The present application discloses self assembling arrays prepared in accordance with the present invention. The product of the methods according to the present invention is an array of immobilized materials that are spatially multiplexed. Such an array may be used for screening materials for desirable properties in a high throughput manner. Such an array may also be used for detecting the presence of one or more molecules in a sample and therefore provide diagnostic evaluation.

The array is formed on a porous membrane proximate at least one electrode. Preferably, the electrode current or potential is controlled and operated by interface with a computer either proximate or remote from the electrode. The array is formed on a porous support having a plurality of electrodes proximate the porous membrane. In especially preferred embodiments, at least about 100 electrodes and oligonucleotides are present on the array. In even more preferred embodiments at least about 500 or at least about 1000 electrodes and oligonucleotides are present on the array. It is contemplated that one or more than one oligonucleotides may be proximate each electrode.

Also methods are described for detecting a target molecule in a sample comprising the step of contacting a biological sample with an array comprising molecules displayed in a spatially multiplexed manner. The method features contacting a biological sample with an array. Preferably, the array comprises at least about 1000 coded affinity molecules. The method is preferably performed under conditions suitable to allow binding of target molecules to corresponding ligands or binding domains. Preferably, the detection is performed using fluorescently labeled tags that may be detected by such devices as epifluorescent microscopes and a CCD camera.

### Definitions

As used herein, the following terms are understood to convey the following general meanings:
A "Spatially multiplexed array" is an array comprising different materials immobilized at different spatial locations. As an example, an array may use a rectilinear coordinate system in which each element of a grid is labeled by two variables (x,y). Each separate spatial location on this type of grid has a unique two variable label. Different materials may be immobilized at different spatial locations such a grid. Each immobilized material may be associated with a particular spatial location on the grid. By this definition, these immobilized materials are "spatially multiplexed" on such a grid system.
The term "coded affinity" refers to chemical affinity that is dependant upon the sequence of monomer units in a linear, semi-linear or closed-loop polymer chain. By way of example, oligonucleotides may be produced that have relatively large hybridization affinity for a complementary nucleotide sequence.

### Arrays

The present invention features using an electrode array to electrochemically immobilize a spatially multiplexed array of affinity anchors onto a porous membrane. According to preferred embodiments of the methods of the present invention, the affinity anchor molecule is attached to the array electrochemically so that the anchor molecule only becomes attached to the array over an active electrode.

The methods of the present invention are particularly applicable to produce spatially multiplexed affinity arrays on the surface of the arrays described in U.S. Serial Nos. 9/003,075 and 09/214,348. Such arrays are designed to allow synthesizing chemical compounds such as peptides at well-defined and individually addressable locations. Such arrays may be manufactured at low cost by contract fabricators using existing semiconductor manufacturing facilities. **Figure 2** describes how such an array may be used to synthesize a pattern of molecules. First, the array may be coated with a biocompatible porous membrane that allows molecules to flow freely between a bulk solvent and an electrode. The array may then be immersed in a solution containing a precursor to an electrochemically-generated (ECG) reagent of interest. A computer may then interface with the array to turn on the desired electrode pattern, and the precursor may be electrochemically converted into an active species. The electrochemically-generated (ECG) reagent, in turn, reacts with molecules immobilized to the membrane overlying the electrode.

A central feature of these preferred arrays is the ability to confine the ECG reagents to a region immediately adjacent to a selected microelectrode. This is illustrated in **Figure 3**. Here, a fluorescein dye has been immobilized covalently at individually addressed microelectrode locations. The dye may be tightly confined to a checkerboard pattern and exhibits substantially no chemical crosstalk between active and inactive microelectrodes. This level of localization of ECG reagents may be achieved by exploiting the physical chemistry of the solution in which the microelectrode array is immersed. Such solutions usually contain buffers and scavengers that react with ECG reagents. However, the rate at which ECG reagents are produced can overwhelm the ability of the solution to react with them in the small local area immediately proximate to the microelectrode. As a result, chemistry that is mediated by ECG reagents occurs near selected microelectrodes, but there is no chemical crosstalk.

In some embodiments, the surface of these preferred arrays may be provided with a layer of linker molecules. Linker molecules allow for indirect attachment of monomers or pre-formed molecules to the substrate or a layer overlaying the substrate. The linker molecules are preferably attached to an overlaying layer via silicon-carbon bonds, using, for example, controlled porosity glass (CPG) as the layer material. Linker molecules also facilitate target recognition of the synthesized polymers. Furthermore, the linker molecules are preferably chosen based upon their hydrophilic/hydrophobic properties to improve presentation of synthesized polymers to certain receptors. For example, in the case of a hydrophilic receptor, hydrophilic linker molecules will be preferred so as to permit the receptor to approach more closely the synthesized polymer.

The linker molecules are preferably of sufficient length to permit polymers on a completed substrate to interact freely with binding entities exposed to the substrate. The linker molecules, when used, are preferably 10 to 1000 atoms long, and in especially preferred embodiments are about 650 atoms long to provide sufficient exposure of the functional groups to the binding entity. The linker molecules, which may be advantageously used in accordance with the invention include, for example, aryl acetylene, ethylene glycol oligomers containing from 2 to 10 monomer units, diamines, diacids, amino acids, and combinations thereof. Other linker molecules may be used in accordance with the different embodiments of the present invention and will be recognized by those skilled in the art in light of this disclosure.

According to another preferred embodiment. linker molecules may be provided with a cleavable group at an intermediate position, which group can be cleaved with an electrochemically generated reagent. This group is preferably cleaved with a reagent different from the reagent(s) used to remove the protective groups. This enables removal of the various synthesized polymers or nucleic acid sequences following completion of the synthesis by include: acetic anhydride, n-acetylimidizole, isopropenyl formate, fluorescamine , 3-nitrophthalic anhydride and 3-sulfoproponic anhydride. Of these, acetic anhydride and n-acetylimidizole are preferred.

The linker molecules are preferably of sufficient length to permit polymers on a completed substrate to interact freely with binding entities exposed to the substrate. The linker molecules, when used, are most preferably about 650 atoms long to provide sufficient exposure of the functional groups to the binding entity. The linker molecules, which may be advantageously used in accordance with the invention include, for example, aryl acetylene, ethylene glycol oligomers containing from 2 to 10 monomer units, diamines, diacids, amino acids, and combinations thereof. Other linker molecules may be used in accordance with the different embodiments of the present invention and will be recognized by those skilled in the art in light of this disclosure.

According to another preferred embodiment, linker molecules may be provided with a cleavable group at an intermediate position, which group can be cleaved with an electrochemically generated reagent. This group is preferably cleaved with a reagent different from the reagent(s) used to remove the protective groups. This enables removal of the various synthesized polymers following completion of the synthesis by way of electrochemically generated reagents. In particular, derivatives of the acid labile 4,4'-dimethyoxytrityl molecules with an exocyclic active ester can be used in accordance with the present invention. These linker molecules can be obtained from Perseptive Biosystems, Framingham, Massachusetts. More preferably, N-succinimidyl-4-[bis-(4-methoxyphenyl)-chloromethyl]-benzoate is used as a cleavable linker molecule during DNA synthesis. The synthesis and use of this molecule is described in A *Versatile Acid-Labile Linker for Modification of Synthetic Biomolecules,* by Brian D. Gildea, James M. Coull and Hubert Koester, Tetrahedron Letters, Volume 31, No. 49, pgs 7095-7098 (1990). Alternatively, other manners of cleaving can be used over the entire array at the same time, such as chemical reagents, light or heat.

The use of cleavable linker groups affords dissociation or separation of synthesized molecules, *e.g.*, polymers, from the electrode array at any desired time. This dissociation allows transfer of the, for example, synthesized polymer, to another electrode array or to a second substrate. Obviously, those skilled in the art can contemplate several uses for transferring the molecules synthesized on the original electrode to a second substrate.

The preferred arrays used according to the present invention need not be in any specific shape, that is, the electrodes need not be in a square matrix shape. Contemplated electrode array geometries include: squares; rectangles; rectilinear and hexagonal grid arrays with any sort of polygon boundary; concentric circle grid geometries wherein the electrodes form concentric circles about a common center, and which may be bounded by an arbitrary polygon; and fractal grid array geometries having electrodes with the same or different diameters. Interlaced electrodes may also be used in accordance with the present invention. Preferably, however, the array of electrodes contains at least 100 electrodes in an at least 10x10 matrix. More preferably, the array of electrodes contains at least 400 electrodes in, for example, an at least 20x20 matrix. Even more preferably, the array contains at least 1024 or 2048 electrodes in, for example, an at least 64x32 matrix, and still more preferably, the array contains at least 204,800 electrodes in, for example, an at least 640x320 array. Other sized arrays that may be used in accordance with the present invention will be readily apparent to those of skill in the art upon review of this disclosure.

Electrode arrays containing electrodes ranging in diameter from approximately less than 1 micron to approximately 100 microns (0.1 millimeters) are advantageously used in accordance with the present invention. Further, electrode arrays having a distance of approximately 10-1000 microns from center to center of the electrodes, regardless of the electrode diameter, are advantageously used in accordance with the present invention. More preferably, a distance of 50-100 microns exists between the centers of two neighboring electrodes.

The electrodes may be flush with the surface of the substrate. However, in accordance with a preferred embodiment of the present invention, the electrodes are hemisphere shaped, rather than flat disks. More specifically, the profile of the hemisphere shaped electrodes is represented by an arctangent function that looks like a hemisphere. Those skilled in the art will be familiar with electrodes of this shape. Hemisphere shaped electrodes help assure that the electric potential is constant across the radial profile of the electrode. That is, hemisphere shaped electrodes help assure that the electric potential is not larger near the edge of the electrode than in the middle of the electrode, thus assuring that the generation of electrochemical reagents occurs at the same rate at all parts of the electrode.

Electrodes that may be used in accordance with the invention may be composed of, but are not limited to, noble metals such as iridium and/or platinum, and other metals, such as, palladium, gold, silver, copper, mercury, nickel, zinc, titanium, tungsten, aluminum, as well as alloys of various metals, and other conducting materials, such as, carbon, including glassy carbon, reticulated vitreous carbon, basal plane graphite, edge plane graphite and graphite. Doped oxides such as indium tin oxide, and semiconductors such as silicon oxide and gallium arsenide are also contemplated. Additionally, the electrodes may be composed of conducting polymers, metal doped polymers, conducting ceramics and conducting clays. Among the noble metals, platinum and palladium are especially preferred because of the advantageous properties associated with their ability to absorb hydrogen, *i.e.*, their ability to be "preloaded" with hydrogen before being used in the methods of the invention.

In accordance with other preferred embodiments of these arrays , one or more of the electrodes are proximate to a "getter" structure. Preferably the "getter" structure comprises a second electrode. The second electrode may be of any shape or size. However, it may function to scavenge electrochemically generated reagents alone or in conjunction with a scavenging solution and/or a buffering solution or it may function to reduce or eliminate diffusion of ions into nearby electric sources such as semiconductor circuitry. Such second electrodes may be made of the same material as the selected electrodes discussed above.

The electrode(s) used in accordance with the arrays may be connected to an electric source in any known manner. Preferred ways of connecting the electrodes to the electric source include CMOS switching circuitry, radio and microwave frequency addressable switches, light addressable switches, and direct connection from an electrode to a bond pad on the perimeter of a semiconductor chip. The placement of a "getter" structure in accordance with the description set forth above effectively prolongs the life of a semiconductor chip thereby making such a connection particularly advantageous.

CMOS switching circuitry involves the connection of each of the electrodes to a CMOS transistor switch. The switch is accessed by sending an electronic address signal down a common bus to SRAM (static random access memory) circuitry associated with each electrode. When the switch is "on", the electrode is connected to an electric source. This is a preferred mode of operation.

Radio and microwave frequency addressable switches involve the electrodes being switched by a RF or microwave signal. This allows the switches to be thrown both with and/or without using switching logic. The switches can be tuned to receive a particular frequency or modulation frequency and switch without switching logic. Alternatively, the switches can use both methods.

Light addressable switches are switched by light. In this method, the electrodes can also be switched with and without switching logic. The light signal can be spatially localized to afford switching without switching logic. This is accomplished, for example, by scanning a laser beam over the electrode array; the electrode being switched each time the laser illuminates it. Alternatively, the whole array can be flood illuminated and the light signal can be temporally modulated to generate a coded signal. However, switching logic is required for flood illumination.

One can also perform a type of light addressable switching in an indirect way. In this method, the electrodes are formed from semiconductor materials. The semiconductor electrodes are then biased below their threshold voltage. At sufficiently low biases, there is no electrochemistry occurring because the electrons do not have enough energy to overcome the band gap. The electrodes that are "on" will already have been switched on by another method. When the electrodes are illuminated, the electrons will acquire enough energy from the light to overcome the band gap and cause electrochemistry to occur.

Thus, an array of electrodes can be poised to perform electrochemistry whenever they are illuminated. With this method, the whole array can be flood illuminated or each electrode can be illuminated separately. This technique is useful for very rapid pulsing of the electrochemistry without the need for fast switching electronics. Direct connection from an electrode to a bond pad on the perimeter of the semiconductor chip is another possibility, although this method of connection could limit the density of the array.

Electrochemical generation of the desired type of chemical species requires that the electric potential of each electrode have a certain minimum value. That is to say, a certain minimum potential is necessary, which may be achieved by specifying either the voltage or the current. Thus, there are two ways to achieve the necessary minimum potential at each electrode either the voltage may be specified at the necessary value or the current can be determined such that it is sufficient to accommodate the necessary voltage. The necessary minimum potential value will be determined by the type of chemical reagent chosen to be generated. One skilled in the art can easily determine the necessary voltage and/or current to be used based on the chemical species desired. The maximum value of potential that can be used is also determined by the chemical species desired. If the maximum value of potential associated with the desired chemical species is exceeded, undesired chemical species may be resultantly produced.

### Synthesis Methods

The present invention, in preferred embodiments, features electrochemically immobilizing coded affinity molecules to an array. Exemplary coded affinity molecules within the scope of the present invention are oligonucleotides.

When the affinity anchor is an oligonucleotide, the affinity anchor molecule may be immobilized on the array using the methods set forth in United States Serial Nos. 09/003,075 and 09/214,348. **Figure** 2 demonstrates how an array according to the present invention may be used to synthesize a pattern of molecules. First, the array is coated with a biocompatible porous membrane that allows molecules to flow freely between the bulk solvent and the electrode. The array is then immersed in a solution containing an inactive precursor to the electrochemically generated (ECG) reagent of interest. A computer then turns on the desired electrode pattern, and the precursor is electrochemically converted into the active species. The ECG-reagent, in turn, reacts with molecules immobilized to the membrane overlying the electrode. By buffering the solution properly, diffusion of the ECG-reagent beyond the area of the active electrode is eliminated.

The method of the present invention preferably utilizes a method for electrochemical placement of a material at a specific location on a substrate as described in United States Patent Application Serial Nos. 09/003,075 and 09/214,348, and in international patent application numbers PCT/US97/11463 and PCT/US99/00599, comprising the steps of: providing a substrate having at its surface at least one electrode that is proximate to at least one molecule that is reactive with an electrochemically generated reagent, applying a potential to the electrode sufficient to generate electrochemical reagents capable of reacting to the at least one molecule proximate to the electrode, and producing a chemical reaction thereby. Such method allows production of an array of coded affinity molecules such as oligonucleotides.

In a preferred embodiment, the present invention utilizes a method for electrochemical synthesis of an array of separately formed oligonucleotides on a substrate, which comprises the steps of: placing a buffering or scavenging solution in contact with an array of electrodes that is proximate to a substrate surface, said surface being proximate to one or more molecules bearing at least one protected chemical functional group attached thereto, selectively deprotecting at least one protected chemical functional group on at least one of the molecules; bonding a first monomer, normally a nucleotide having at least one protected chemical functional group to one or more deprotected chemical functional groups of the molecule; selectively deprotecting a chemical functional group on the bonded molecule or another of the molecules bearing at least one protected chemical functional group; bonding a second monomer, normally a nucleotide having at least one protected chemical functional group to a deprotected chemical functional group of the bonded molecule or the other deprotected molecule; and repeating the selective deprotection of a chemical functional group on a bonded protected monomer or a bonded protected molecule and subsequently bonding an additional monomer, normally a nucleotide, to the deprotected chemical functional group until at least two separate polymers, normally oligonucleotides of desired length are formed on the substrate surface.

In additional preferred embodiments, the present invention utilizes a method for electrochemical synthesis of an array of coded affinity molecules comprising separately formed polymers on a substrate, which comprises the steps of: placing a buffering or scavenging solution in contact with an array of electrodes that is proximate to a substrate surface, said surface being proximate to one or more molecules bearing at least one protected chemical functional group attached thereto, selectively deprotecting at least one protected chemical functional group on at least one of the molecules; bonding a first monomer having at least one protected chemical functional group to one or more deprotected chemical functional groups of the molecule; selectively deprotecting a chemical functional group on the bonded molecule or another of the molecules bearing at least one protected chemical functional group; bonding a second monomer having at least one protected chemical functional group to a deprotected chemical functional group of the bonded molecule or the other deprotected molecule; and repeating the selective deprotection of a chemical functional group on a bonded protected monomer or a bonded protected molecule and the subsequent bonding of an additional monomer to the deprotected chemical functional group until at least two separate polymers of desired length are formed on the substrate surface. According to the present invention, the monomer or molecule is normally a nucleotide and the polymer is an oligonucleotide.

By using these electrochemical techniques, it is possible to place monomers, both those that can be used for polymer synthesis and those that can be decorated, and pre-formed molecules at small and precisely known locations on a substrate. It is therefore possible to synthesize oligonucleotides of a known nucleic acid sequence at selected locations on a substrate. Moreover, it is possible to synthesize oligonucleotides of a known nucleic acid sequence at preselected locations on a substrate wherein the exact location and known coordinates of the polymers are known.

Preferred embodiments of the methods of synthesis described herein use a buffering or scavenging solution in contact with each electrode, which is buffered towards the electrochemically generated reagents, in particular, towards protons and/or hydroxyl ions, and that actively prevents chemical cross-talk caused by diffusion of the electrochemically generated ions from one electrode to another electrode in an array. For example, when an electrode exposed to an aqueous or partially aqueous media is biased to a sufficiently positive (or negative) potential, protons (or hydroxyl ions) are produced as products of water hydrolysis. Protons, for example, are useful for removing electrochemical protecting groups from several molecules useful in combinatorial synthesis, for example, peptides.

In order to produce separate and pure peptides, it is desirable to keep these protons (or hydroxyl ions) confined to the area immediately proximate the selected eiectrode(s) in order to minimize, and, if possible to eliminate, chemical cross-talk between nearby electrodes in an array. The spatial extent of excursion of electrochemically generated reagents can be actively controlled by the use of a buffering or scavenging solution that reacts with the reagents that move away from the selected electrodes, thus preventing these reagents from reacting at a nearby electrode.

Another technique for confining these electrochemically generated reagents to the area immediately proximate the selected electrode(s) is to place a "getter" structure in proximity to the selected electrode(s) and substantially exposed to the external environment. Such a "getter" structure may be used in conjunction with or in place of a scavenging solution. A "getter" structure may be designed of any suitable material and formed into any suitable shape or size as skilled artisans will readily appreciate. The most important criteria for such a "getter" structure is that it function to scavenge electrochemically generated reagents that may diffuse away from the selected electrode(s). The "getter" structure may function passively by reacting chemically with the electrochemically generated reagents. Alternatively, the "getter" structure may function actively to scavenge the electrochemically generated reagents. This may be performed by applying sufficient potential to the "getter" structure to cause electrochemical scavenging. Another function of the "getter" structure may be to prevent the diffusion of ions toward or into circuitry such as transistors that may be operably linked to the selected electrode(s). In accordance with this function, the "getter" structure may be placed substantially at the interface between an insulating dielectric and a metallization layer operably linked to the selected electrode(s).

As the coded affinity molecule is an oligonucleotide, the substrate in the invention is proximate to at least one electrode, *i*.*e*., an electrically conducting region of the substrate that is substantially surrounded by an electrically insulating region. The electrode(s), by being "proximate" to the substrate, can be located at the substrate, *i*.*e*., embedded in or on the substrate, can be next to, below, or above the substrate, but need to be in close enough proximity to the substrate so that the reagents electrochemically generated at the electrode(s) can accomplish the desired deprotection of the chemical functional groups on the monomer(s) and/or molecule(s).

In addition to being proximate to at least one electrode, the substrate has on a surface thereof, at least one molecule, and preferably several molecules, bearing at least one chemical functional group protected by an electrochemically removable protecting group. These molecules bearing protected chemical functional groups also need to be proximate to the electrode(s). In this regard, the molecules on the surface of the substrate need to be in close enough proximity to the electrode(s) so that the electrochemical reagents generated at the electrode can remove the protecting group from at least one protected functional group on the proximate molecule(s).

The molecules bearing a protected chemical functional group that are attached to the surface of the substrate may be selected generally from monomers, linker molecules and pre-formed molecules. Preferably, the molecules attached to the surface of the substrate include monomers, nucleotides, amino acids, peptides, and linker molecules. All of these molecules generally bond to the substrate by covalent bonds or ionic interactions. Alternatively, all of these molecules can be bonded, also by covalent bonds or ionic interactions, to a layer overlaying the substrate, for example, a permeable membrane layer, which layer can be adhered to the substrate surface in several different ways, including covalent bonding, ionic interactions, dispersive interactions and hydrophilic or hydrophobic interactions. In still another manner of attachment, a monomer or pre- formed molecule may be bonded to a linker molecule that is bonded to either the substrate or a layer overlaying the substrate.

The monomers, linker molecules and pre-formed molecules used herein, preferably nucleotides, are preferably provided with a chemical functional group that is protected by a protecting group removable by electrochemically generated reagents. If a chemical functional group capable of being deprotected by an electrochemically generated reagent is not present on the molecule on the substrate surface, bonding of subsequent monomers or pre-formed molecules cannot occur at this molecule. Preferably, the protecting group is on the distal or terminal end of the linker molecule, monomer, or pre-formed molecule, opposite the substrate. That is, the linker molecule preferably terminates in a chemical functional group, bearing an electrochemically removable protective group. Chemical functional groups that are found on the monomers, linker molecules and pre-formed molecules include any chemically reactive functionality. Usually, chemical functional groups are associated with corresponding protective groups and will be chosen or utilized based on the product being synthesized. The molecules of the invention bond to deprotected chemical functional groups by covalent bonds or ionic interactions.

Monomers, particularly oligonucleotides used in accordance with the methods of the present invention to synthesize the various coded affinity polymers, particularly oligonucleotides, contemplated for use as affinity anchors include all members of the set of small molecules that can be joined together to form a polymer. Monomers include any member of a basis set for synthesis of a polymer. Different basis sets of monomers may be used at successive steps in the synthesis of a polymer. The number of monomers that can be used in accordance with the synthesis methods can vary widely, for example from 2 to several thousand monomers can be used, but in more preferred embodiments, the number of monomers will range from approximately 4 to approximately 200, and, more preferably, the number of monomers will range from 4-20.

Furthermore, essentially any pre-formed molecule can serve as a coded affinity molecule and can be bonded to the substrate, a layer overlaying the substrate, a monomer or a linker molecule and serve as an affinity anchor. Pre- formed molecules include, for example, nucleic acids. Pre-formed molecules are, in general, formed at a site other than on the substrate. In a preferred embodiment, a pre-formed molecule is bonded to a deprotected functional group on a molecule, monomer, or another pre- formed molecule. In this regard, a pre-formed molecule that is already attached to the substrate may additionally bear at least one protected chemical functional group to which a monomer or other pre-formed molecule may bond, following deprotection of the chemical functional group.

Protective groups are materials that bind to a monomer, a linker molecule or a pre-formed molecule to protect a reactive functionality on the monomer, linker molecule or pre-formed molecule, which may be removed upon selective exposure to an activator, such as an electrochemically generated reagent. Protective groups that may be used in accordance with the present invention preferably include all acid and base labile protecting groups. For example, hydroxy groups on phosphoramidites may be protected by dimethoxytrityl (DMT), which is acid labile. Exocyclic amine groups on nucleosides, in particular on phosphoramidites, are preferably protected by dimethylformamidine on the adenosine and guanosine bases, and isobutyryl on the cytidine bases, both of which are base labile protecting groups. This protection strategy is known as fast oligonucleotide deprotection (FOD). Phosphoramidites protected in this manner are known as FOD phosphoramidites.

Additional protecting groups that may be used in accordance with the present invention include acid labile groups for protecting hydroxyl groups: dimethyltrityl; and basic labile groups for protecting phosphotriester groups: cyanoethyl.

The coded affinity molecules of the invention, *i*.*e*., the monomers, linker molecules and pre- formed molecules, can be attached directly to the substrate or can be attached to a layer or membrane of separating material that overlays the substrate. That is, the affinity anchors of the present invention may be attached to a layer or membrane of separating material that overlays the substrate. Materials that can form a layer or membrane overlaying the substrate, such that molecules can be bound there for modification by electrochemically generated reagents, include: controlled porosity glass (CPG); generic polymers, such as, teflons, nylons, polycarbonates, polystyrenes, polyacylates, polycyanoacrylates, polyvinyl alcohols, polyamides, polyimides, polysiloxane, polysilicones, polynitriles, polyelectrolytes, hydrogels, epoxy polymers' melamines, urethanes and copolymers and mixtures of these and other polymers; biologically derived polymers, such as, polysaccharides, polyhyaluric acids, celluloses, and chitons; ceramics, such as, alumina, metal oxides, clays, and zeolites; surfactants; thiols; self-assembled monolayers; porous carbon; and fullerine materials. The membrane can be coated onto the substrate by spin coating, dip coating or manual application, or any other art acceptable form of coating.

Reagents that can be generated electrochemically at the electrodes fall into two broad classes: oxidants and reductants. There are also miscellaneous reagents that are useful in accordance with the invention. Oxidants that can be generated electrochemically include iodine, iodate, periodic acid, hydrogen peroxide, hypochlorite, metavanadate, bromate, dichromate, cerium (IV), and permanganate. Reductants that can be generated electrochemicaily include chromium (II), ferrocyanide, thiols, thiosulfate, titanium (III), arsenic (III) and iron (II). The miscellaneous reagents include bromine, chloride, protons and hydroxyl ions. Among the foregoing reagents, protons, hydroxyl ions, iodine, bromine, chlorine and the thiols are preferred.

In accordance with preferred embodiments of the methods of synthesizing coded affinity molecules of the present invention, a buffering and/or scavenging solution is in contact with each electrode. The buffering and/or scavenging solutions that may be used in accordance with the invention are preferably buffered toward, or scavenge, ions such as protons and/or hydroxyl ions, although other electrochemically generated reagents capable of being buffered and/or scavenged are clearly contemplated. The buffering solution functions to prevent chemical cross- talk due to diffusion of electrochemically generated reagents from one electrode in an array to another electrode in the array, while a scavenging solution functions to seek out and neutralize/deactivate the electrochemically generated reagents by binding or reacting with them. Thus, the spatial extent of excursion of electrochemically generated reagents can be actively controlled by the use of a buffering solution and/or a scavenging solution. In accordance with the invention, the buffering and scavenging solutions may be used independently or together. Preferably, a buffering solution is used because the capacity of a buffering solution is more easily maintained, as compared with a scavenging solution.

Buffering solutions that can be used in accordance with the present invention include all electrolyte salts used in aqueous or partially aqueous preparations. Buffering solutions preferably used in accordance with the present invention include: acetate buffers, which typically buffer around pH 5; borate buffers, which typically buffer around pH 8; carbonate buffers, which typically buffer around pH 9; citrate buffers, which typically buffer around pH 6; glycine buffers, which typically buffer around pH 3; HEPES buffers, which typically buffer around pH 7; MOPS buffers, which typically buffer around pH 7; phosphate buffers, which typically buffer around pH 7; TRIS buffers, which typically buffer around pH 8; and 0.1 M KI in solution, which buffers the iodine concentration by the equilibrium reaction I₂ + I⁻ = I₃ ⁻, the equilibrium coefficient for this reaction being around 10⁻².

Alternatively, or in combination with a buffering solution, a scavenging solution may be used that contains species such as ternary amines that function as proton scavengers or sulfonic acids that function as hydroxyl ion scavengers in nonaqueous media. The rate at which a reagent/species is scavenged depends both on the intrinsic rate of the reaction occurring and on the concentration of the scavenger. For example, solvents make good scavengers because they are frequently present in high concentrations. Most molecules scavenge in a nonselective way, however, some molecules, such as superoxide dismutase and horseradish peroxidase, scavenge in a selective manner.

Of particular interest to the present invention are scavenger molecules that can scavenge the different reactive species commonly generated, for example, by water hydrolysis at electrodes, including hydroxyl radicals, superoxides, oxygen radicals, and hydrogen peroxide. Hydroxyl radicals are among the most reactive molecules known, their rate of reaction is diffusion controlled, that is, they react with the first reactant/species they encounter. When hydroxyl radicals are generated by water hydrolysis, the first molecule they usually encounter is a water molecule. For this reason, water is a rapid and effective scavenger of hydroxyl radicals. Superoxides are also a relatively reactive species, but can be stable in some nonaqueous or partially aqueous solvents. In aqueous media, superoxides rapidly react with most molecules, including water. In many solvents, they can be scavenged selectively with superoxidase dismutase.

Oxygen radicals are a family of oxygen species that exist as free radicals. They can be scavenged by a wide variety of molecules such as water or ascorbic acid. Hydrogen peroxide is a relatively mild reactive species that is useful, in particular, in combinatorial synthesis. Hydrogen peroxide is scavenged by water and many types of oxidizing and reducing agents. The rate at which hydrogen peroxide is scavenged depends on the redox potential of the scavenger molecules being used. Hydrogen peroxide can also be scavenged selectively by horseradish peroxidase. Another electrochemically generated species that can be scavenged is iodine. Iodine is a mild oxidizing reagent that is also useful for combinatorial synthesis. Iodine can be scavenged by reaction with hydroxyl ions to form iodide ions and hypoiodite. The rate at which iodine is scavenged is pH dependent; higher pH solutions scavenge iodine faster. All of the scavenger molecules discussed above may be used in accordance with the present invention. Other scavenger molecules will be readily apparent to those skilled in the art upon review of this disclosure.

In accordance with the methods of synthesizing coded affinity molecules of the present invention, the buffering solutions are preferably used in a concentration of at least 0.01 mM. More preferably, the buffering solution is present in a concentration ranging from 1 to 100mM, and still more preferably, the buffering solution is present in a concentration ranging from 10 to 100mM. Most preferably, the buffering solution concentration is approximately 30 mM. A buffering solution concentration of approximately 0.1 molar, will allow protons or hydroxyl ions to move approximately 100 angstroms before buffering the pH to the bulk values. Lower buffering solution concentrations, such as 0.00001 molar, will allow ion excursion of approximately several microns, which still may be acceptable distance depending on the distance between electrodes in an array.

In accordance with the methods of synthesizing coded affinity molecules of the present invention, the concentration of scavenger molecules in a solution will depend on the specific scavenger molecules used since different scavenging molecules react at different rates. The more reactive the scavenger, the lower the concentration of scavenging solution needed, and vice versa. Those skilled in the art will be able to determine the appropriate concentration of scavenging solution depending upon the specific scavenger selected.

The at least one electrode proximate the substrate of the invention is preferably an array of electrodes. Arrays of electrodes of any dimension may be used, including arrays containing up to several million electrodes. Preferably, multiple electrodes in an array are simultaneously addressable and controllable by an electrical source. More preferably, each electrode is individually addressable and controllable by its own electrical source, thereby affording selective application of different potentials to select electrodes in the array. In this regard, the electrodes can be described as "switchable".

### Coded Affinity Molecules and Target Molecules

Exemplary coded affinity molecules within the scope of the present invention include oligonucleotides. Once the affinity anchors of the present invention are localized to the array, preferably by electrochemical immobilization, the array may be contacted with the molecules of interest to be localized thereto.

Where the coded affinity molecule is an oligonucleotide, the molecule to be immobilized binds by hybridization interaction.

The molecules to be immobilized may be contacted with the affinity anchors under suitable binding or hybridizing conditions as are well known to those skilled in the art. Once the molecules to be immobilized have bound to the coded affinity molecules, the excess, unbound molecules may be removed by any suitable washing step known to those of skill in the art.

### Labels

A label may be added directly to the molecule to be immobilized. Means of attaching labels to amino acids, peptides and proteins are well known to those of skill in the art. Detectable labels suitable for use in the present invention include any composition detectable by spectroscopic, photochemical, biochemical, immunochemical, electrical, optical, laser or chemical means. Useful labels in the present invention include biotin for staining with labeled streptavidin conjugate, magnetic beads (*e.g.*, Dynabeads™), fluorescent dyes (e.g., fluorescein, texas red, rhodamine, green fluorescent protein, etc.), radiolabels (e.g., 3H, '251, 35S, 14C, 32P, etc.), enzymes (e.g., horse radish peroxidase, alkaline phosphatase, etc.), and colorimetric labels such as colloidal gold or colored glass or plastic (*e*.*g*., polystyrene, polypropylene, latex, etc.) beads. Uses of such labels are provided in, *e.g.*, U.S. Patent Nos. 3,817,837; 3,850,752; 3,939,350; 3,996,345; 4,277,437; 4,275,149; and 4,366,241.

Means of detecting such labels are well known to those of skill in the art. Radiolabels may be detected using photographic film or scintillation counters, fluorescent markers may be detected using a photodetector to detect emitted light. Enzymatic labels may be detected by providing the enzyme with a substrate and detecting the reaction product produced by the action of the enzyme on the substrate. Colorimetric labels may be detected by simply visualizing the colored label.

The label may be added to the molecule to be immobilized prior to, or after binding to the coded affinity molecules. Direct labels are detectable labels that are directly attached to or incorporated into the molecule to be immobilized prior to binding to the coded affinity molecule. Indirect labels may be joined to the duplex after the molecule to be immobilized has bound to the coded affinity molecule. In some embodiments, an indirect label is attached to a binding moiety that has been attached to a molecule to be immobilized. Thus, for example, the molecule to be immobilized may be biotinylated before the hybridization. After hybridization, an aviden-conjugated fluorophore will bind the biotin bearing hybrid duplexes providing a label that is easily detected.

In some embodiments, the molecules to be immobilized are not themselves labeled. Rather, the coded affinity molecules are labeled or are attached directly or indirectly to a signal resposive moiety. Methods for detecting labeled molecules to be immobilized once bound to the coded affinity molecules of a high density microarray are known to those of skill in the art. A colorimetric label or a radioactive labeled probe may be used.

In some embodiments, the molecules to be immobilized are labeled with a fluorescent label and the localization of the label on the array may be accomplished by fluorescent microscopy. The array may be excited with a light source at the excitation wavelength of the particular fluorescent label and the resulting fluorescence at the emission wavelength is detected. In a particularly preferred embodiment, the excitation light source is a laser appropriate for the excitation of the fluorescent label. A confocal microscope may be automated with a computer-controlled stage to automatically scan the array. Similarly, the microscope may be equipped with a phototransducer attached to an automated data acquisition system to automatically record the fluorescence signal produced binding to each coded affinity molecule on the array. Such automated systems are described at length in U.S. Patent No: 5,143,854.

One of skill in the art will appreciate that methods for evaluating the binding results varies with the nature of the specific coded affinity molecule as well as the controls provided. In one embodiment, simple quantification of the intensity for each coded affinity molecule is determined. This is accomplished by measuring coded affinity molecule signal strength at each location representing a different coded binding site on the array. Comparing the absolute intensities of an array bound to a molecule to be immobilized from a test sample with intensities produced by a control sample provides a measure of the relative amount of the molecule present.

Signals may vary in strength with affinity, the amount of label on the molecule to be immobilized and the amount of the molecule to be immobilized in the sample. Typically molecules present at very low levels may produce a very weak signal. At some low levels of concentration, the signal may become indistinguishable from background. In evaluating the data, a threshold intensity value may be selected below which a signal is not counted as being essentially indistinguishable from background. Where it is desirable to detect molecules at lower levels, a lower threshold may be chosen. Conversely, where only high molecular concentrations are to be evaluated a higher threshold level may be selected. In one embodiment, a threshold is about 10% above that of the average background signal. In addition, the provision of appropriate controls permits a more detailed analysis that controls for variations in conditions. Thus, for example, in a preferred embodiment, the spatially multiplexed coded affinity array is provided with normalization controls. Where the binding conditions are poor, the normalization controls will show a smaller signal, and where binding conditions are good, the normalization controls will provide a higher signal. Normalization of the signal derived from other probes in the array to the normalization controls thus provides a control for variations in binding conditions. Typically, normalization is accomplished by dividing the measured signal from the other probes in the array by the average signal produced by the normalization controls. Normalization may also include correction for variations due to sample preparation and amplification. Such normalization may be accomplished by dividing the measured signal by the average signal from the sample preparation/amplification control probes. The resulting values may be multiplied by a constant value to scale the results.

The concentration of a particular molecule can then be determined by measuring the signal intensity of each of the coded affinity molecules that bind specifically to the target molecule and normalizing to the normalization controls.

The methods of the present invention are preferably performed using a computer. The computer runs a software program that includes computer code incorporating the invention for analyzing binding intensities measured from a substrate and monitoring and/or quantifying the concentration of one or more target molecules to be immobilized.

## Claims

1. A method for making a self-assembling array being formed on a porous membrane having a plurality of electrodes proximate the porous membrane, the method comprising the steps of:
(a) preparing one or more spatially multiplexed arrays of oligonucleotides,
(b) exposing the oligonucleotide array to a solution that contains at least one antibody molecule comprising an oligonucleotide moiety, capable of binding to an oligonucleotide of the array by hybridisation interaction, and
(c) washing off unbound antibody molecules comprising an oligonucleotide moiety to form the self assembled array.

2. A self-assembled array, formed on a porous membrane, having a plurality of electrodes proximate the porous membrane, comprising one or more spatially multiplexed arrays of oligonucleotides, attached to the porous membrane, and at least one antibody molecule comprising an oligonucleotide moiety, bound by hybridisation interaction to an oligonucleotide of the array.

## Patentansprüche

1. Verfahren zum Herstellen einer sich selbst anordnenden Matrix, die an einer porösen Membran mit einer Vielzahl von Elektroden in unmittelbarer Nähe der porösen Membran gebildet wird, wobei das Verfahren folgende Schritte umfasst:
a) es werden ein oder mehrere räumlich vervielfachte Matrizen von Oligonukleotiden hergestellt,
b) die Oligonukleotid-Matrix wird mit einer Lösung behandelt, die mindestens ein Antikörper-Molekül mit einem oligonukleotiden Anteil enthält, das in der Lage ist, eine Verbindung mit einem Oligonukleotid der Matrix durch Hybridisierungs-Wirkung einzugehen, und
c) es werden ungebundene Antikörper-Moleküle mit einem oligonukleotiden Anteil abgewaschen, um die sich selbst anordnende Matrix zu bilden.

2. Aus einer porösen Membran gebildete, sich selbst anordnende Matrix ist, die eine Vielzahl von Elektroden in unmittelbarer Nähe der porösen Membran aufweist, wobei die sich selbst anordnende Matrix eine oder mehrere räumlich vervielfachte Matrizen von Oligonukleotiden, die mit der porösen Membran verbunden sind, und mindestens ein Antikörper-Molekül mit einem oligonukleotiden Anteil, das durch Hybridisierungs-Wirkung mit einem Oligonukleotid der Matrix gebunden ist, umfasst.

## Revendications

1. Un procédé pour fabriquer un réseau auto-assemblé formé sur une membrane poreuse ayant une pluralité d'électrodes proches de la membrane poreuse, le procédé comprenant les étapes consistant à :
(a) préparer un ou plusieurs réseaux d'oligonucléotides multiplexés spacialement,
(b) exposer le réseau d'oligonucléotides à une solution qui contient au moins une molécule d'anticorps comprenant un groupe caractéristique des oligonucléotides, capable de se lier à un oligonucléotide du réseau par interaction par hybridation, et
(c) éliminer par lavage les molécules d'anticorps comprenant un groupe caractéristique des oligonucléotides non liées pour former le réseau auto-assemblé.

2. Un réseau auto-assemblé, formé sur une membrane poreuse, ayant une pluralité d'électrodes proches de la membrane poreuse, comprenant un ou plusieurs réseaux d'oligonucléotides multiplexés spacialement, attachés à la membrane poreuse, et au moins une molécule d'anticorps comprenant un groupe caractéristique des oligonucléotides, liée par interaction par hybridation à un oligonucléotide du réseau.
